# EUROPEAN PATENT SPECIFICATION

(11) **EP 1 986 037 B1**
(45) Date of publication and mention of the grant of the patent: **20.03.2013**
(21) Application number: 06711732.5
(22) Date of filing: 16.01.2006
(51) Int. Cl.: G02F 1/133, G09G 3/20, G09G 3/36

(54) **DISPLAY ELEMENT DRIVE METHOD, DISPLAY ELEMENT**
DISPLAYELEMENT-ANSTEUERVERFAHREN, DISPLAYELEMENT
PROCEDE DE COMMANDE D'ELEMENT D'AFFICHAGE, ELEMENT D'AFFICHAGE

(43) Date of publication of application: 29.10.2008
(73) Proprietor: FUJITSU LIMITED, Kawasaki-shi, Kanagawa 211-88 (JP)
(72) Inventor: NOSE, Masaki, Kawasaki-shi, Kanagawa2118588 (JP); SHINGAI, Tomohisa, Kawasaki-shi, Kanagawa2118588 (JP)
(74) Representative: Wilding, Frances Ward
(86) International application number: PCT/JP2006/300451
(87) International publication number: WO 2007/080655

(56) References cited:
- WO-A-97/31362
- JP-A- 8 304 773
- JP-A- 02 272 490
- JP-A- 07 210 120
- JP-A- 08 304 773
- JP-A- 11 015 441
- JP-A- 11 305 711
- JP-A- 2000 020 028
- JP-A- 2002 072 974
- JP-A- 2002 341 831
- JP-A- 2005 266 163
- US-A- 5 844 536
- US-A1- 2006 242 358
- US-B1- 6 552 709
- CHOI W S ET AL: "Effect of small liquid crystal molecules on the driving voltage of cholesteric liquid crystal displays", DISPLAYS DEVICES, DEMPA PUBLICATIONS, TOKYO, JP, vol. 25, no. 5, 1 December 2004 (2004-12-01), pages 195-199, XP004709403, ISSN: 0141-9382, DOI: 10.1016/J.DISPLA.2004.09.012

## Description

### TECHNICAL FIELD

This invention relates to a display element drive method, a display element and an electronic terminal, or in particular, to a technique for driving the display elements used for a still image display including the cholesteric liquid crystal.

### BACKGROUND ART

In recent years, research organizations of various enterprises and universities have vigorously made efforts to develop electronic paper. The electronic paper is expected to find a great variety of applications primarily in electronic books, and other fields such as subdisplays of mobile terminals and IC card display devices.

The cholesteric liquid crystal is known as a promising material of the electronic paper. The cholesteric liquid crystal has superior features including a semi-permanent display holdability (memorability), a bright color display, a high contrast and a high resolution. Further, the cholesteric liquid crystal is capable of bright full-color display by lamination of display layers for exhibiting the reflected colors of RGB, respectively.

With the cholesteric liquid crystal, the memorability makes possible an inexpensive, simple matrix drive and the display size as large as A4 or more, for example, can be realized with comparative ease. The cholesteric liquid crystal consumes power only when updating the display contents (rewriting the image), and once the image has been rewritten completely, the image is held even after power is turned off.

First, an example of drive operation of the cholesteric liquid crystal is explained taking the display element according to this invention as an example.

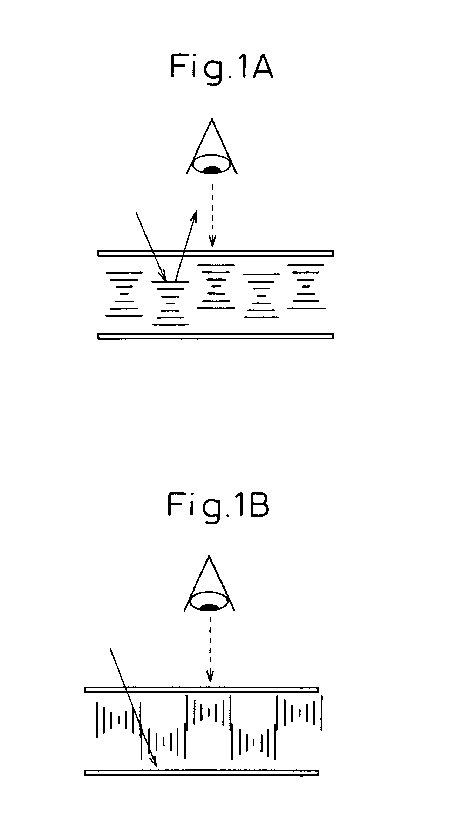

Figs. 1A, 1B are diagrams for explaining the orientation of the cholesteric liquid crystal, in which Fig. 1A shows the planar state and the Fig. 1B the focal conic state.

The cholesteric liquid crystal can assume two stable states of the planar state and the focal conic state without any electric field.

Specifically, as shown in Fig. 1A, in the planar state, the incident light is reflected on the liquid crystal, and therefore, visible to human eyes.

In the focal conic state, on the other hand, the incident light is transmitted through the liquid crystal as shown in Fig. 1B. By forming a light absorption layer in addition to the liquid crystal layer, the black color can be displayed in the focal conic state.

In the planar state, the light of a wavelength corresponding to the spiral pitch of the liquid crystal molecules is reflected, and the wavelength λ associated with the maximum reflection is given as λ = n·p, where n is the average refractive index of the liquid crystal and p the spiral pitch. Incidentally, the reflection band Δλ increases with the refractive index anisotropy Δn.

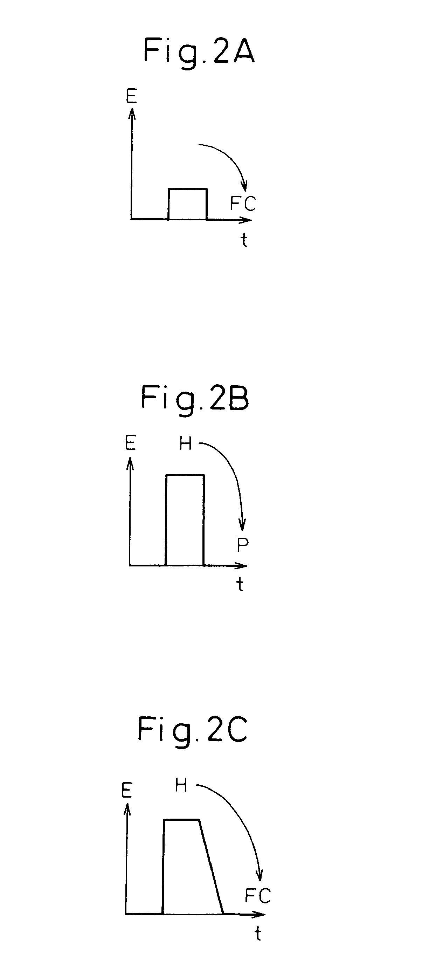

Figs. 2A, 2B and 2C are diagrams showing the voltage characteristic (relation between time and voltage) for driving the cholesteric liquid crystal, and show the electric field applied to the liquid crystal with the change in the homeotropic state, the focal conic state and the planar state. The homeotropic state is designated as H, the focal conic state as FC and the planar state as P.

First, upon application of a strong electric field to the cholesteric liquid crystal, the spiral structure of the liquid crystal molecules is completely loosened into the homeotropic state in which all the molecules are arranged in the direction of the electric field.

In the case where the electric field is reduced to zero suddenly from the homeotropic state as shown in Fig. 2B, the spiral axis of the liquid crystal assumes the position perpendicular to the electrodes into the planar state P in which the light is selectively reflected in accordance with the spiral pitch.

In the case where an electric field so weak as to loosen the spiral axis of the liquid crystal molecules with difficulty is removed after being formed as shown in Fig. 2A, or in the case where a strong electric field is formed and slowly removed as shown in Fig. 2C, then, the spiral axis of the liquid crystal assumes the direction parallel to the electrodes into the focal conic state in which the incident light is transmitted.

In the case where an electric field of an intermediate strength is applied and suddenly removed, on the other hand, the liquid crystals in planar state P and focal conic state FC come to coexist, thereby making possible the halftone color display.

As described above, the cholesteric liquid crystal is bistable, and therefore, by utilizing this phenomenon, the information can be displayed.

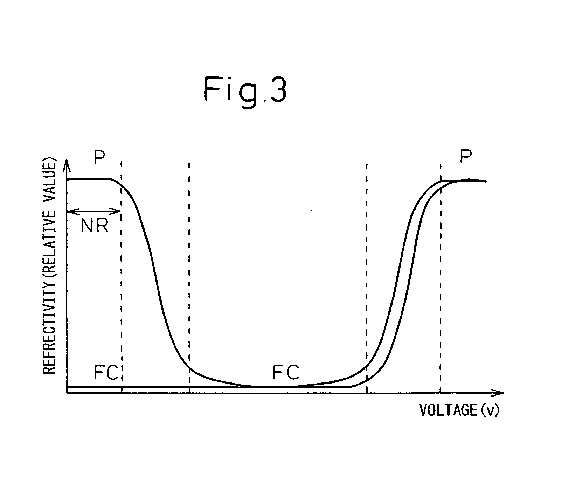

Fig. 3 is a diagram showing the reflectivity characteristic (relation between voltage and reflectivity) of the cholesteric liquid crystal, and collectively illustrates the voltage response characteristic of the cholesteric liquid crystal explained with reference to Figs. 2A to 2C.

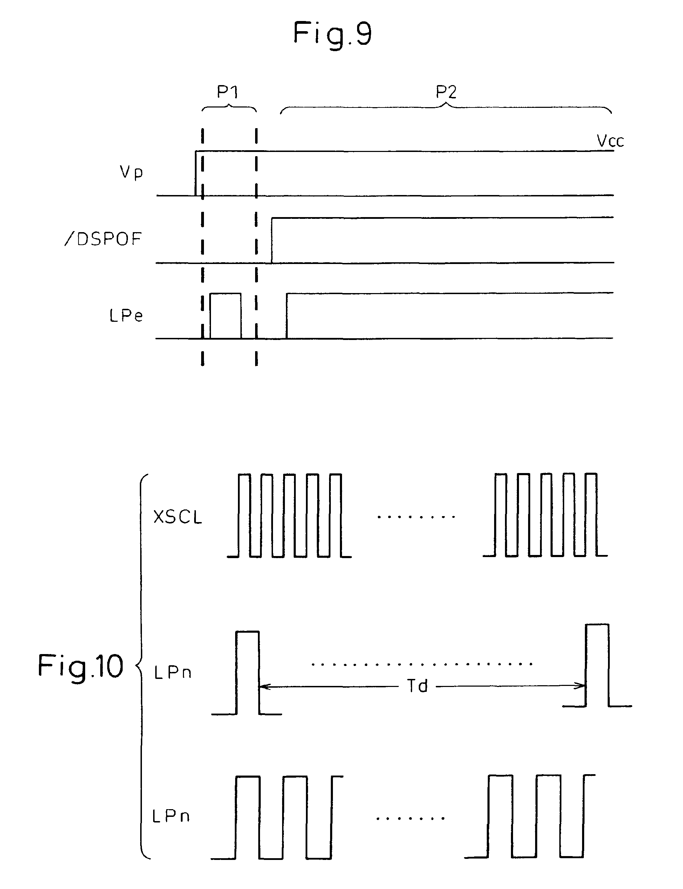

As shown in Fig. 3, in the case where the initial state is the planar state P (extreme left portion of Fig. 3 where reflectivity is high), an increase in the pulse voltage into a certain range comes to assume a drive band for the focal conic state FC (portion of Fig. 9 where reflectivity is low) and a further increase of the pulse voltage again assumes a drive band for the planar state P (extreme right portion where voltage is high).

In the case where the initial state is the focal conic state FC (extreme left portion where reflectivity is low), on the other hand, the drive band for the planar state P comes to be gradually assumed with the increase in pulse voltage.

Incidentally, in the planar state P, only the right circularly polarized light or the left circularly polarized light is reflected, and the remaining circularly polarized light is transmitted. Therefore, the theoretical maximum value of reflectivity is 50 %.

The conventional multiplex drive method for an element using the ferroelectric liquid crystal has been proposed in which the voltage variation of the highfrequency AC waveform due to the effect of the signal electrode waveform in the nonselect period is removed by the synthetic waveform applied to the liquid crystal element, so that a low voltage is used for drive operation thereby to reduce the driver cost (for example, see Patent Document 1). In Patent Document 1, the "nonselect" period is defined as a "nonselect pixel" (synchronized with the write operation) in the write operation and not in the phase (unsynchronized) completely independent of the write operation.

Further, the conventional drive method for the liquid crystal element having a memorability has been proposed in which a superior contrast can be maintained over a long period of time by applying an erasing pulse out of the select period in order to assure the uniform orientation of the liquid crystal (for example, see Patent Document 2). In Patent Document 2, the "erasing pulse applied out of the select period", which is a reset pulse for assuring the uniform orientation of the liquid crystal, is applied in synchronism with the image write operation and not intended to suppress the extraneous power consumption out of synchronism with the image write operation.

Patent Document 1: JP-S63-29353-A
Patent Document 2: JP-H07-140443-A
JP8304773 A refers to a liquid crystal panel driving method. For a liquid crystal panel aligning therein (n) lines of row electrodes and (m) lines of column electrodes in a grid shape and sealing liquid crystals between them for matrix displaying, a scanning driver (row driving means) sequentially outputs shifted scanning signals to (n) lines of the row electrodes, and a signal driver (column driving means) outputs data signals (m) lines of the column electrodes by means of the inputted display signals. Here, a display control circuit controls a generation timing of scanning signals from the scanning driver and data signals from the signal driver, and brings at least either of the outputs from the scanning driver and the signal driver to a high impedance state, for one field period at least at the time of starting a power source supply.
US6552709 B1 refers to a power-on display driving method and display driving circuit. A display driving method of US6552709 B1 for driving a display in which (n*m) pieces of pixels are arranged at intersection points of n-pieces of scanning electrodes at predetermined intervals in a row direction and m-pieces of signal electrodes at predetermined intervals in a column direction, where n of said n-pieces is a positive integer and m of said m-pieces is a positive integer, by applying each bit of n-bits of parallel data of a shift register for shifting a start pulse synchronously with a first shift clock of one horizontal synchronous period to said n-pieces of scanning electrodes and by applying m-pieces of data signals to said m-pieces of signal electrodes, said display driving method comprises: a step of, after turning a power supply ON, supplying a second shift clock of a period shorter than said one horizontal synchronous period to said shift register for at least n-periods instead of said first shift clock, said n-periods corresponding to said n-pieces of scanning electrodes; and a step of stopping each bit of output data from said shift from transferring to n-pieces of scanning electrode drivers at least during a period corresponding to said n-periods.
United States patent publication US5844536 discloses a display device driven by applying a selection signal to the scanning lines and applying to the data lines data signals for causing prescribed display states at the pixels in association with the selection signal. Further, at least one scanning line in a nonselected state is supplied with a dummy signal for temporarily changing display states of pixels on the at least one scanning line.

### DISCLOSURE OF THE INVENTION

### PROBLEMS TO BE SOLVED BY THE INVENTION

As described above, the electronic paper has come to find practical applications using the cholesteric liquid crystal, for example, in recent years.

In many cases, the simple matrix drive with an inexpensive multipurpose driver is used for the electronic paper. This poses the problem that an excessive surge current is generated immediately after starting the image rewrite (write) operation by switching on power. This surge current greatly consumes the battery, and further, may increase beyond the current supplied by the battery, thereby sometimes stopping the rewrite operation or causing a malfunction.

We have vigorously studied in search of the cause of an excessive surge current flowing immediately after starting to rewrite the image by switching on power, and have made it clear that the shift register of the scan-side driver becomes unstable and selects extraneous electrodes after power is switched on.

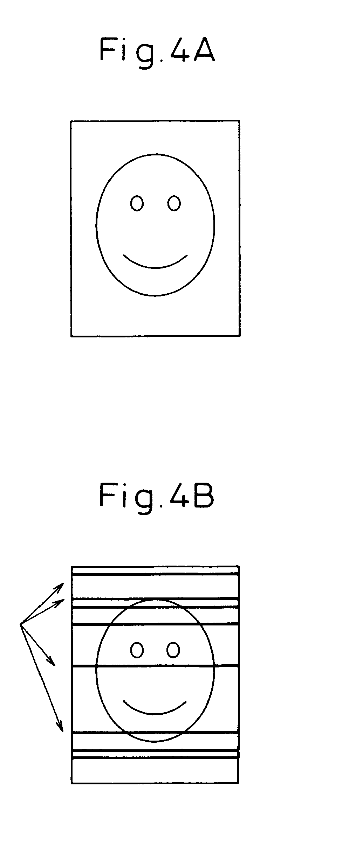

Figs. 4A and 4B are diagrams for explaining the problem in the conventional display element drive method. Incidentally, Fig. 4A shows an example of an image thus far displayed, and Fig. 4B schematically shows the state immediately after starting to rewrite the image by switching on power.

In the prior art, the multipurpose driver used for the STN (Super Twisted Nematic) liquid crystal display element, for example, is normally used for displaying a dynamic image, and therefore, in the case where the shift register of the scan-side driver (scan driver) becomes unstable and selects extraneous electrodes, the scanning of the first frame with the extraneous electrodes selected poses no problem since the surge current flows only for a very short time.

As shown in Fig. 4B, for example, assume that the multipurpose driver is used for the display element of a still image such as the electronic paper formed of the cholesteric liquid crystal. The scan rate for the electronic paper is so low (about one second required to scan one frame, for example) that the scanning time with the extraneous electrodes selected is lengthened and a large current (surge current) flows.

In the case where the image rewrite operation is started by switching on power, the shift register of the scan-side multipurpose driver becomes unstable and extraneous electrodes as many as about one third of all the scan electrodes are selected. In the process, a current (surge current) as large as several hundred milliamperes flows.

This phenomenon of the selection of extraneous electrodes attributable to the use of the multipurpose driver occurs not only in the case where the power supply of the electronic paper or the like is actually switched on but also in the case where the image is rewritten with the power on. In the latter case, the same phenomenon occurs, for example, in the case where the power supply for the multipurpose is cut off while the previous image is displayed, and the power is supplied again to the multipurpose driver when rewriting the image. Specifically, in the case where the power supply once cut off is supplied again to the scan driver, for example, the shift register of the scan drive becomes unstable and extraneous electrodes selected, with the result that a large surge current flows.

The above-mentioned surge current flowing at the time of switching on power is especially large for a large-sized display such as A4 or poster size. In such case, the problem is posed in which the surge current makes it difficult to drive the battery or display irregularities are generated due to an unstable drive voltage.

In view of the above-described problems of the conventional display element, an object of the present invention is to provide a display element drive method, a display element and an electronic terminal in which a large surge current which otherwise might be generated immediately after the image write operation can be suppressed. Another object of the present invention is to provide a display element drive method, a display element and an electronic terminal in which the use of the inexpensive multipurpose driver and battery drive are made possible by suppressing the large surge current occurring immediately after image write operation while at the same time making it possible to save power and provide a stable display quality.

### MEANS FOR SOLVING THE PROBLEMS

According to a first aspect of the present invention, there is provided a method of driving a cholesteric liquid crystal display element including n scan electrodes and a plurality of data electrodes, wherein n ≥ 2, the n scan electrodes crossing the data electrodes to form a matrix, said n scan electrodes receiving scan pulses from a multipurpose Super Twisted Nematic driver operating as a scan driver, said scan driver including m control terminals, wherein m ≥ n and the m control terminals include the n scan electrodes, comprising the steps of: after switching on power, executing n empty scan processes by applying an empty scan voltage to said n scan electrodes of the display element, wherein said empty scan voltage is not higher than, a response voltage of said display element, and after executing the n emply scan processes, executing n image writing processes by applying a drive voltage to said n scan electrodes of the display element, and excuting (m-n) empty scan processes by applying the empty scan voltage to the remaining (m-n) control terminals, wherein a time interval between scan pulses of the empty scan processes is shorter than a time interval between scan pulses of the image writing processes.

According to a second aspect of the present invention, there is provided a cholesteric liquid crystal display element comprising n scan electrodes and a plurality of data electrodes, wherein n ≥ 2, the n scan electrodes crossing the data electrodes to form a matrix, said nscan electrodes being operable to receive scan pulses from a multipurpose Super Twisted Nematic driver operating as a scan driver, said scan driver including m control terminals, wherein m ≥ n
and the m control terminals include the n scan electrodes, wherein after power is switched on, said scan driver is operable to execute n empty scan processes by applying an empty scan voltage to said n scan electrodes of the display element, wherein said empty scan voltage is not higher than a response voltage of said display element, and after said n empty scan processes are executed, said scan driver is operable to execute n image writing processes by applying a drive voltage to said n scan electrodes of the display element, and to execute (m-n) empty scan processes by applying the empty scan voltage to the remaining (m-n) control terminals , wherein a time interval between scan pulses of the empty scan processes is shorter than a time interval between scan pulses of the image writing processes.

Specifically, the present inventors have discovered that the surge current can be greatly suppressed by scanning (empty scan) a predetermined number of lines at high speed while at the same time suppressing the voltage output for driving the display medium in order to quickly obviate the unstable state of the scan driver after switching on power.

In the process, the nonselect data is desirably output synchronously from the data driver.
As a result, the surge current which otherwise might be caused by the extraneous scan line selection can be greatly suppressed by empty scan instantaneously without causing any discomfort on the part oft he user thereby to realize the subsequent stable drive operation.

According to this invention, there are provided a display element drive method, a display element and an electronic terminal wherein the large surge current generated immediately after the image write operation can be suppressed. Further, there are provided a display element drive method, a display element and an electronic terminal wherein the inexpensive use of the multipurpose driver and battery drive are made possible by suppressing the large surge current which otherwise might occur immediately after the image write operation while at the same time saving power and providing a stable display quality.

### BRIEF DESCRIPTION OF THE DRAWINGS

Fig. 1A is a diagram (part 1) for explaining the orientation of cholesteric liquid crystal;
Fig. 1B is a diagram (part 2) for explaining the orientation of cholesteric liquid crystal;
Fig. 2A is a diagram (part 1) showing the voltage characteristic for driving the cholesteric liquid crystal;
Fig. 2B is a diagram (part 2) showing the voltage characteristic for driving the cholesteric liquid crystal;
Fig. 2C is a diagram (part 3) showing the voltage characteristic for driving the cholesteric liquid crystal;
Fig. 3 is a diagram showing the reflectivity characteristic of the cholesteric liquid crystal;
Fig. 4A is a diagram (part 1) for explaining the problem of the conventional display element drive method;
Fig. 4B is a diagram (part 2) for explaining the problem of the conventional display element drive method;
Fig. 5A is a diagram (part 1) for explaining the principle of the display element drive method according to this invention;
Fig. 5B is a diagram (part 2) for explaining the principle of the display element drive method according to this invention;
Fig. 5C is a diagram (part 3) for explaining the principle of the display element drive method according to this invention;
Fig. 6 is a block diagram schematically showing an electronic terminal using a display element according to an embodiment of the present invention;
Fig. 7 is a sectional view schematically showing an example of the display element shown in Fig. 6;
Fig. 8 is a flowchart for explaining an example of the display element drive method according to this invention;
Fig. 9 is a diagram showing a control signal in an example of the display element drive method according to the present invention;
Fig. 10 is a diagram for explaining the scan pulse signal in the display element drive method according to this invention;
Fig. 11A is a diagram (part 1) for explaining the scan driver according to a comparative example of the present invention;
Fig. 11B is a diagram (part 2) for explaining the scan driver according to a comparative example of the present invention;
Fig. 12A is a diagram (part 1) for explaining the scan driver according to a second embodiment of the present invention;
Fig. 12B is a diagram (part 2) for explaining the scan driver according to a second embodiment of the present invention;
Fig. 13 is a diagram for explaining the scan driver according to a comparative example fourth of the present invention;
Fig. 14 is a diagram for explaining for explaining the scan driver according to a comparative example of the present invention;
Fig. 15 is a diagram showing an example of the display element according to this invention; and
Fig. 16 is a block diagram schematically showing an electronic terminal using the display element according to another comparative example of the present invention.

### DESCRIPTION OF REFERENCES

- 1: Display element
- 3: Power supply circuit
- 4: Control circuit
- 11, 12: Film substrate
- 13, 14: Transparent electrode (ITO)
- 15: Liquid crystal composition (cholesteric liquid crystal)
- 16, 17: Seal member
- 18: Light absorption layer
- 19: Drive circuit
- 21: Scan-side driver IC (scan driver)
- 22: Data-side driver IC (data driver)
- 31: Boosting unit
- 32: Voltage generating unit
- 33: Regulator
- 41: Arithmetic unit
- 42: Control signal generating unit
- 43: Image data generating unit
- 100: Reader-writer (electromagnetic wave source)
- 101, 211: Blue (B) layer
- 102, 212: Green (G) layer
- 103, 213: Red (R) layer
- 104: Black (K) layer
- 110: Blue (B) layer control circuit
- 120: Green (G) layer control circuit
- 130: Red (R) layer control circuit
- 200: Electronic terminal (display device)
- 202: Antenna
- 203: Rectification circuit
- 210: Control circuit
- FC: Focal conic state
- H: Homeotropic state
- P: Planar state

### BEST MODE FOR CARRYING OUT THE INVENTION

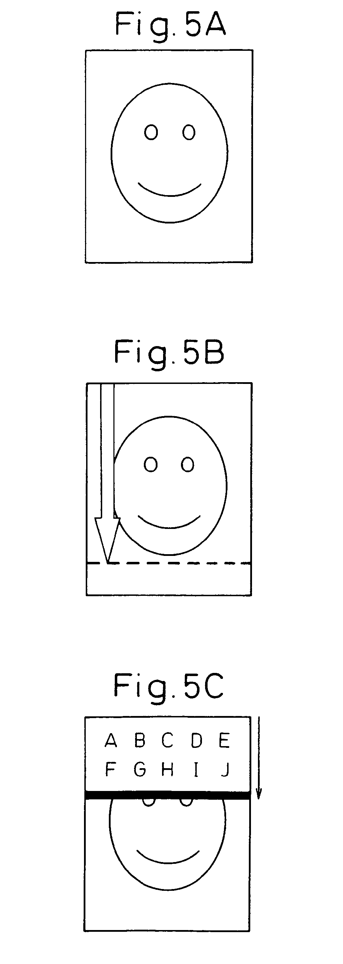

First, the principle of the display element drive method according to the present invention is explained with reference to Figs. 5A to 5C. Incidentally, Fig. 5A illustrates an example of the image thus far displayed, and Fig. 5B schematically shows the manner in which the empty scanning is conducted immediately after starting the image write (rewrite) operation by switching on power. Fig. 5C shows the manner in which the image is actually written after the empty scan.

In the display element drive method according to the present invention, as shown in Fig. 5B, the empty scanning process is executed for the scan electrodes before the image writing process, and then, as shown in Fig. 5C, the actual image writing process is executed.

As a result, the shift register of the scan driver is prevented from becoming so unstable that extraneous electrodes are selected, thereby preventing a large surge current from flowing.

### EMBODIMENTS

Below, a display element drive method, a display element and an electronic terminal according to an embodiment of the present invention are explained in detail with reference to the accompanying drawings.

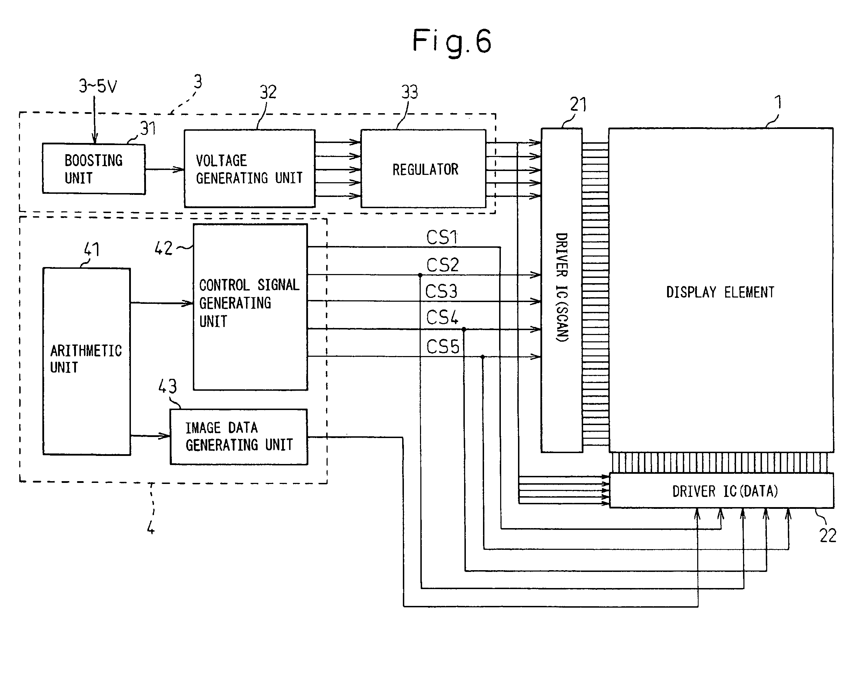

Fig. 6 is a block diagram schematically showing the electronic terminal (display device) using the display element according to an embodiment of the present invention. In Fig. 6, reference numeral 1 designates a display element, numeral 3 a power supply circuit, numeral 4 a control circuit, numeral 21 a scan-side driver IC (scan driver), and numeral 22 a data-side driver IC (data driver). The scan driver 21 shown in Fig. 6 is the one according to a first embodiment of the present invention, and has as many control terminals as the scan electrodes in the display element 1.

As shown in Fig. 6, the power supply circuit 3 includes a boosting unit 31, a voltage generating unit 32 and a regulator 33. The boosting unit 31 receives an input voltage of about +3 to +5 V, for example, from a battery, and boosts it to and supplies a voltage for driving a display medium (display element 1) to the voltage generating unit 32. The voltage generating unit 32 generates a voltage required for each of the scan driver 21 and the data driver 22, while the regulator 33 stabilizes and supplies the voltages from the voltage generating unit 32 to the scan driver 21 and the data driver 22.

The control circuit 4 includes an arithmetic unit 41, a control data generating unit 42 and an image data generating unit 43. The arithmetic unit 41 calculates the image data and the control signal supplied from an external source. The image data is supplied to the data driver 22 as a data suitable for the display element 1 through the image data generating unit 43. The control signal, on the other hand, is supplied to the scan driver 21 and the data driver 22 through the control signal generating unit 42 as various control signals suitable for the display element 1.

The control signals supplied to the scan driver 21 and the data driver 22 from the control signal generating unit 42 include a pulse polarity control signal CS2 for controlling by inverting the polarity of the pulse voltage, for example, applied to the display element 1, a frame start signal CS3 indicating the start of the image in one frame, a data latch scan shift signal CS4 for controlling the synchronism of the line with the data stored by the data driver 22 and the line selected by the scan driver 21, and a driver output cut-off signal CS5 for cutting off the output of the data driver 22 and the scan driver 21. Also, a data retrieving clock signal CS1 for sequentially retrieving the data of one line is supplied to the data driver 22 from the control signal generating unit 42.

The display element drive method according to the present invention is implemented by properly designing the sequence in the control circuit 4 for controlling the display contents.

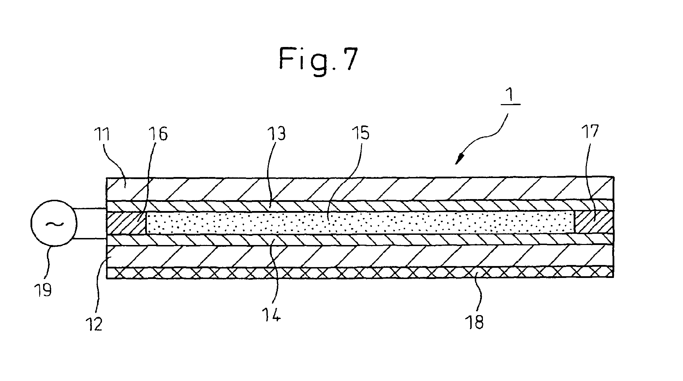

Fig. 7 is a sectional view schematically showing an example of the display element (liquid crystal display element) shown in Fig. 6. In Fig. 7, reference numerals 11, 12 designate a film substrate, 13, 14 a transparent electrode (ITO, for example), 15 a liquid crystal composition (cholesteric liquid crystal), 16, 17 a seal member, 18 a light absorption layer and 19 a drive circuit.

The display element 1 includes the liquid crystal composition 15, and the transparent electrodes 13 and 14 crossing each other at right angles are formed on the inner surface (the surfaces for sealing the liquid crystal composition 15) of the transparent film substrates 11, 12, respectively. Specifically, the film substrates 11, 12 are formed with a plurality of scan electrodes 13 and a plurality of data electrodes 14 in a matrix. Incidentally, the scan electrodes 13 and the data electrodes 14 are drawn in Fig. 7 in the same manner as if they are parallel to each other. Actually, however, each scan electrode 13 of course is crossed by a plurality of the data electrodes 14. Further, the thickness of each film substrate 11, 12 is, for example, about 0.2 mm, and the layer thickness of the liquid crystal composition 15 is, for example, about 3 µm to 6 µm. For simplicity of explanation, however, the ratio between these figures is ignored.

The electrodes 13, 14 are desirably coated with an insulating film or an orientation stabilizing film. Also, a visible light absorption layer 18 is formed, as required, on the outer surface (back surface) of the substrate (12) far from the side entered by the light.

According to this embodiment, the liquid crystal composition 15 is the cholesteric liquid crystal assuming the cholesteric phase at room temperature. These materials and the combination thereof are specifically explained below with reference to a test example.

The seal members 16, 17 are intended to seal the liquid crystal composition 15 between the film substrates 11 and 12. Incidentally, the drive circuit 19 is for applying a predetermined pulse-like voltage to the electrodes 13, 14.

Although the film substrates 11, 12 are both translucent, at least one of the substrates in pair usable as a display element 1 according to this embodiment is required to be translucent. Incidentally, a glass substrate can be taken as an example of a translucent substrate. Nevertheless, substrates of PET, PC or the like flexible resin film can be used other than the glass substrate. Although ITO (indium tin oxide) is a typical material of the electrodes 13, 14, a transparent inductive film of such a material as IZO (indium zinc oxide), a metal electrode of aluminum or silicon, or a photoconductive film of such a material as amorphus silicon or BSO (bismuth silicon oxide) may also be used.

In the liquid crystal display element shown in Fig. 7, as described above, a plurality of parallel band-like transparent electrodes 13, 14 are formed on the inner surface of the transparent film substrates 11, 12 in opposed relation to each other at right angles to each other as viewed from the direction perpendicular to the substrates.

The display element according to this invention may be formed with an insulating film having the function of preventing the shorting between the electrodes or improving the reliability of the liquid crystal display element as a gas barrier layer. Also, an organic material such as polyimide resin, polyamide-imide resin, polyether-imide resin, polyvinyl butyral resin or acryl resin or an inorganic material such as silicon oxide or aluminum oxide can be taken as an example of the material for the orientation stabilizing film. Incidentally, the orientation stabilizing film coated on the electrodes 13, 14 can double as an insulating film.

The display element according to this invention may include a spacer arranged between the pair of the substrates to hold a uniform gap between the substrates. A spherical object F of resin or an inorganic oxide may be employed as an example of this spacer. Also, a fixed spacer having the surface coated with thermoplastic resin may also be suitably used.

The liquid crystal composition (liquid crystal layer) 15 is formed of such a material as a cholesteric liquid crystal containing a nematic liquid crystal composition to which 10 to 40 wt % of chiral agent is added. The amount of the chiral agent added is a value assuming that the total amount of the nematic liquid crystal component and the chiral agent is 100 wt %.

The conventionally well-known various nematic liquid crystals can be used. Nevertheless, the dielectric anisotropy of at least 20 is desirable for the purpose of the drive voltage. Specifically, the dielectric anisotropy of 20 or more comparatively reduces the drive voltage. Also, the cholesteric liquid crystal composition desirably has the dielectric anisotropy (Δε) of 20 to 50. In this range, a multipurpose driver is substantially usable.

Also, the refractive index anisotropy (Δn) is desirably 0.18 to 0.24. A value smaller than this range would reduce the reflectivity in the planar state, while a value larger than this range would increase the scattered reflection in the focal conic state and would be accompanied by an increased viscosity for a reduced response rate. Also, the thickness of the liquid crystal is desirably about 3 µm to 6 µm. A smaller value would reduce the reflectivity in the planar state, while a larger value than this range would result in an excessively high drive voltage.

A QVGA display element 1 of size A4 having the aforementioned configuration was fabricated. This display element 1 has a three-layer laminated structure exhibiting the reflection colors of RGB and is capable of substantially full-color display.

In this configuration, the B (blue), G (green) and R (red) layers are stacked desirably in that order as viewed from the direction of observation. In the case where the polarization of the reflected light of G arranged as a middle layer is opposite to that of B and R, the reflection efficiency is further improved desirably. Specifically, in the case where B and R reflect the right circularly polarized light, G is desirably left circularly polarized, while in the case where B and R reflect the left circularly polarized light, on the other hand, G is desirably right circularly polarized. The polarization of these reflected light can be controlled with the chiral agent formed of R-enatiomer or S-enatiomer (L-enatiomer).

A large-sized display element was test fabricated by arranging the eight color QVGA elements described above in tiles. In the process, the RGB layers are configured to share a scan driver thereby to suppress the cost increase correspondingly. A multipurpose STN driver is used as the driver IC, and the 320 outputs (two driver ICs of 160 outputs) are used on data side while 240 outputs (one driver IC of 240 output) is used on scan side thereby to make up a drive circuit.

At the same time, the voltage input to the driver is desirably stabilized, as required, by the voltage follower of the operational amplifier. A cell is used for the battery.

The display element described above was used for both the conventional drive method and the drive method according to the present invention.
First, the display element described above was driven by the conventional sequence. Then, a surge current of about 800 mA flowed, and the current supply of the battery was overtaken by this overcurrent, resulting in a low-quality display of a contrast greatly different from the original contrast.

The display element described above was next driven by the sequence according to this invention. Then, the surge current was suppressed to not more than 300 mA, and the drive voltage was also stable, thereby realizing the original display quality.

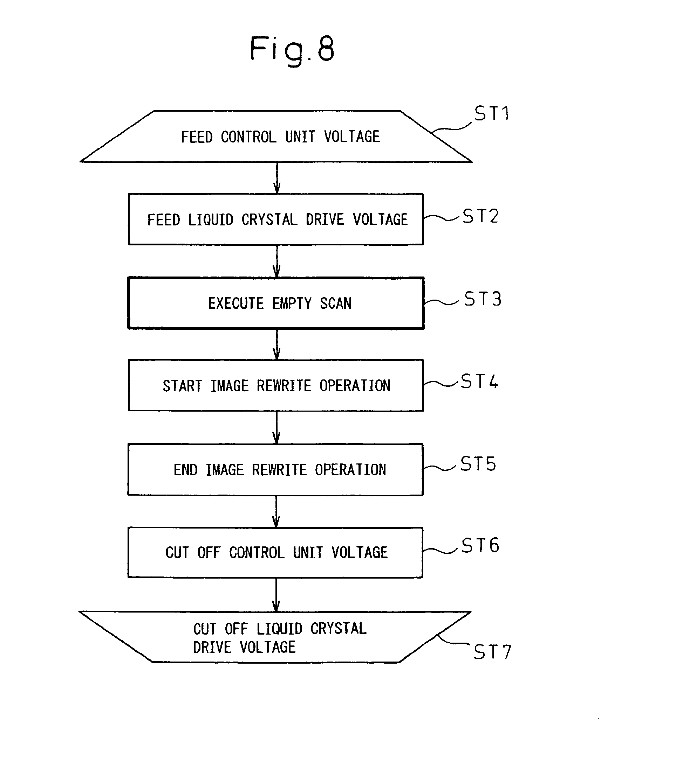

Fig. 8 is a flowchart for explaining an example of the display element drive method according to the present invention.

As shown in Fig. 8, first, the control unit voltage is fed in step ST1, after which the liquid crystal drive voltage is fed in step ST2, and further, the empty scan of the scan driver is carried out in step ST3. After that, the process proceeds to step ST4 to start the image rewrite (write) operation. Specifically, the unstable state of the scan driver after throwing on power is eliminated by carrying out the empty scan before starting the rewrite operation.

In executing the empty scan in step ST3, the image data is allowed to be unstable, and therefore, the image data input process is not specifically required. In other words, even in the case where the image data is unstable (random), the voltage output for empty scan is kept at a threshold value or less, and therefore, the display quality is not affected at all.

Then, the process proceeds to step ST6 and after complete image rewrite operation, the control voltage is cut off in step ST6 and so is the liquid crystal drive voltage.

In the process described above, the empty scan in step ST3 may be carried out in the area NR having not any response shown in Fig. 3, for example. Preferably, however, as shown in Fig. 9, the function, if any, of the driver to cut off the voltage output (normally, controlled by DSPOF), is utilized to entirely turn off the voltage for driving the display medium, thereby effectively saving the power.

Fig. 9 is a diagram showing the control signal in an example of the display element drive method according to the present invention, or how to use the function of cutting off the driver voltage output at the time of empty scan in step ST3 shown in Fig. 8.

In the case where the source voltage Vp comes to assume Vcc with power thrown on as shown in Fig. 9, the signal/DSPOF is reduced to low level "L" in the surge current suppression phase P1 and the driver output is cut off. In this surge current suppression phase P1, the data latch scan pulse signal LPe is output by one frame, for example, and the empty scan of the scan driver is carried out. Incidentally, in the next write phase P2, the image write (rewrite) process is executed as in the prior art.

Fig. 10 is a diagram for explaining the scan pulse signal in the display element drive method according to the present invention. In Fig. 10, reference character XSCL designates a driver clock for data retrieval, LPn a scan pulse for the normal write operation, and LPc a scan pulse for the empty scan.

As shown in Fig. 10, during the normal write operation, the data corresponding to the next-selected scan electrode is retrieved by the data driver in accordance with the driver clock XSCL during the time Td when the scan driver selects one scan electrode. In synchronism with the selection of the scan electrode, a data pulse (voltage output) is applied to each of a plurality of data electrodes from the data driver.

In this case, the interval (Td) between the scan pulses LPn for the normal write operation is, for example, about several hundred µsec to several msec, while the interval of the scan pulses LPe for the empty scan is preferably not more than 1 µsec (say, several hundred nsec). Specifically, during the normal write operation, the time for writing the data of one scan line or the time Td (substantially equal to the interval of the scan pulse LPn) required to retrieve the data of the next one scan line is as long as several hundred µsec to several msec (low in speed), while the interval of the scan pulse LPe for the empty scan is preferably as short as not more than 1 µsec (high in speed) equivalent to the STN liquid crystal display element.

As a result, the image write (rewrite) process similar to the prior art can be executed without being conscious of the waiting time due to the empty scan on the part of the user. According to this embodiment, the empty scan eliminates the unstable state of the shift register of the scan driver and hence the extraneous electrode selection, thereby making it possible to avoid the flow of a large surge current.

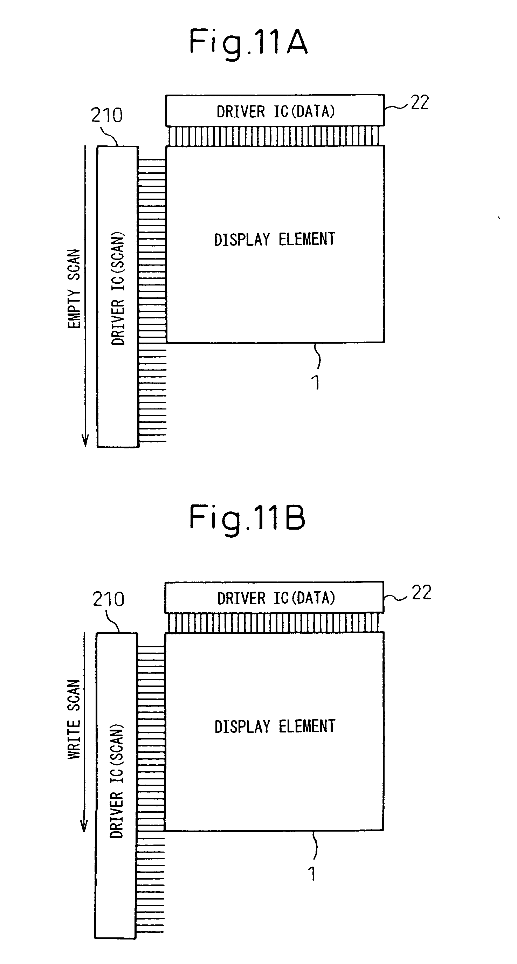

Figs. 11A to 14 are diagrams for explaining further embodiments and comparative examples of the scan driver according to this invention.

Figs. 11A and 11B are diagrams for explaining the scan driver according to a comparative example embodiment of the present invention, in which Fig. 11A shows the empty scan process and Fig. 11B the normal image write process.

As shown in Figs. 11A and 11B, the scan driver 210 according to the comparative example has control terminals greater in number than the scan electrodes in the display element 1.

As shown in Fig. 11A, in the scan driver 210 according to the comparative example, the empty scan process is executed for all the control terminals before the image write (rewrite) operation, for example, immediately after switching on power and applying the operable logic voltage to the scan driver 210. As a result, the unstable state of all the shift registers in the scan driver 210 is obviated, and the surge current can be suppressed to a minimum at the time of starting the image write operation. In this case, all the control electrodes of the scan driver 210 are scanned (empty scan), and therefore, though required somewhat longer for the empty scan than in the second embodiment described below, no serious problem is posed.

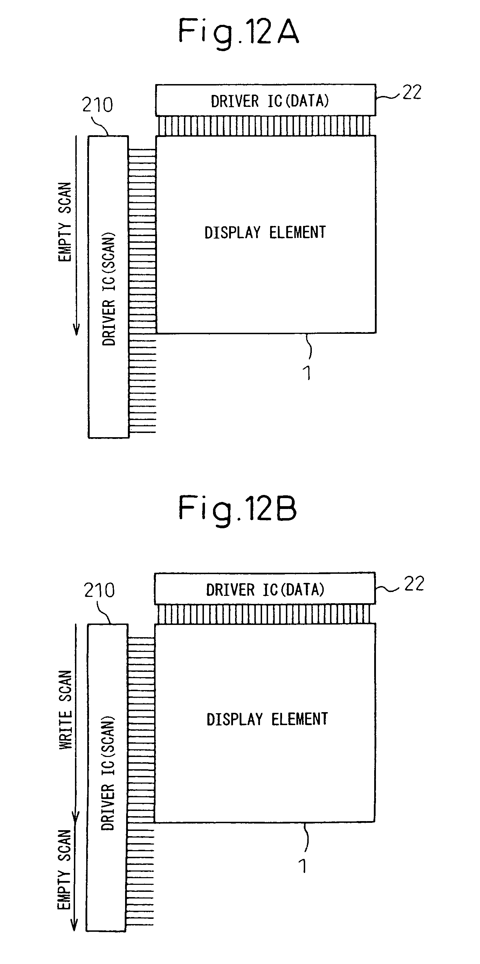

Figs. 12A and 12B are diagrams for explaining the scan driver according to a second embodiment of the present invention, in which Fig. 12A shows the empty scan process, and Fig. 12B the normal image write process.

As shown in Figs. 12A and 12B, the scan driver 210 according to the second embodiment, like the one according to the comparative example described above, has more control terminals than the scan electrodes in the display element 1.

As shown in Fig. 12A, the empty scan process by the scan driver 210 according to the second embodiment is executed as many times as the scan electrodes in the display element 1. In the process, a part of the shift registers of the scan driver other than the control terminals corresponding to the scan electrodes in all the control terminals of the scan driver 210 remain unstable, while the surge current can be sufficiently reduced for practical purposes at the time of the image write operation. According to the second embodiment, the time required for the empty scan at the time of (before) the image write operation can be further shortened than in the comparative example described above.

As shown in Fig. 12B, the image write process is executed in such a manner that an actual image is written by scanning as many times as the scan electrodes in the display element 1 and then the remaining control terminals of the scan driver 210 are empty scanned thereby to obviate the unstable state of all the shift registers of the scan driver. Incidentally, the image writing scan (write scan) is carried out at low speed, for example, and therefore, the time required for empty scan after the write scan at the time of actual image write operation poses substantially no problem.

As described above, the comparative example shown in Figs. 11A, 11B and the second embodiment shown in Figs. 12A, 12B use the same scan driver 210 in different control operations (sequences).

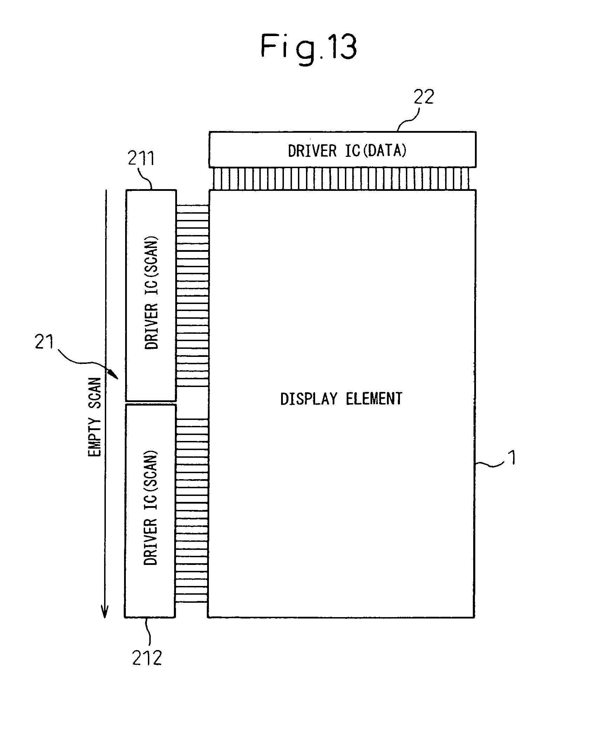

Fig. 13 is a diagram for explaining the scan driver according to a fourth embodiment of the present invention.

As shown in Fig. 13, the scan driver according to another comparative example is configured of two scan driver units 211 and 212 each having as many control terminals as one half of the scan electrodes of the display element 1. According to this comparative example, the empty scan process is executed for all the scan electrodes sequentially by the two scan driver units 211, 212. The empty scan process using a plurality of the scan driver units (driver ICs) 211, 212 in this way, if executed for all the scan electrodes sequentially, is facilitated in a sequence similar to the actual image write process.

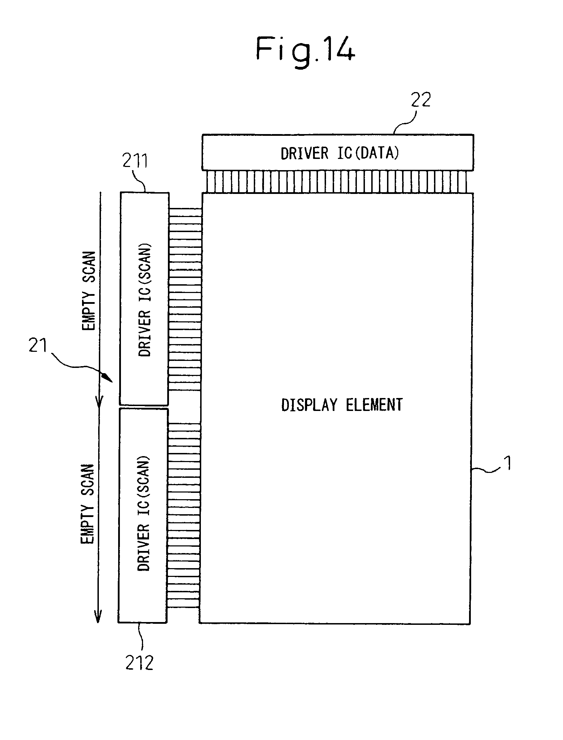

Fig. 14 is a diagram for explaining the scan driver according to another comparative example of the present invention.

As shown in Fig. 14, the scan driver according to this comparative example, like in the comparative example described above, is configured of two scan driver units 211, 212 each having as many control terminals as one half of the scan electrodes of the display element 1, and the empty scan process is executed by the two scan drivers units 211, 212 in parallel each for the corresponding one half of the scan electrodes. As a result, the time required for the empty scan process can be shortened to about one half that required in the fourth embodiment described above. Incidentally, the actual image write process, like the empty scan process shown in Fig. 12 above, is sequentially executed for all the scan electrodes of the display element 1.

Incidentally, the number of the scan driver units (driver ICs) making up the scan driver is of course not limited to 2.

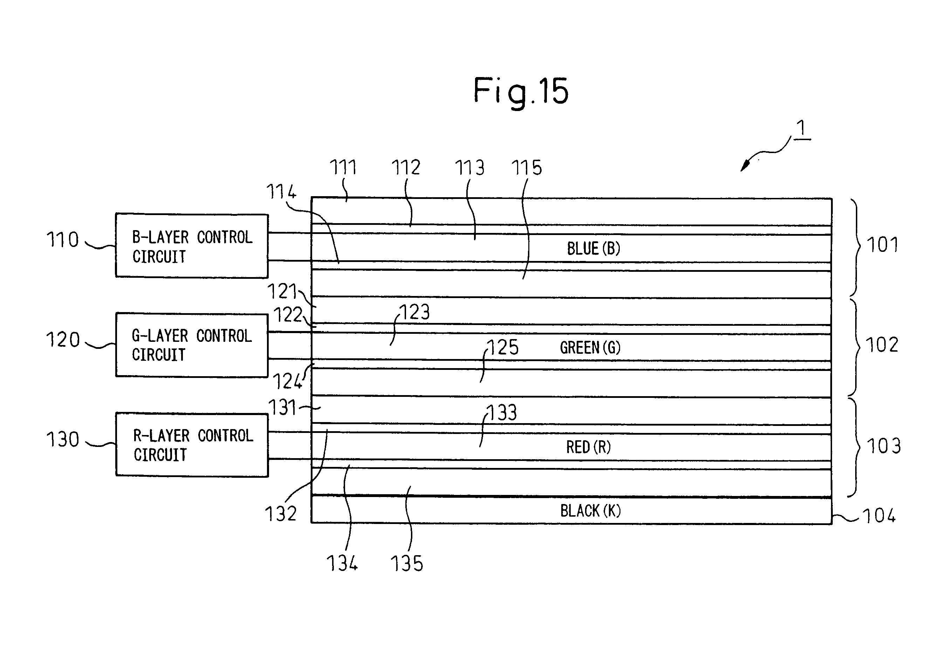

Fig. 15 is a diagram showing an example of the display element according to this invention. In Fig. 15, reference numeral 10 designates a blue (B) layer reflecting the blue light, 102 a green (G) layer reflecting the green light, 103 a red (R) layer reflecting the red light, and 104 a black (K) layer absorbing the light.

As shown in Fig. 15, the display element 1 has a laminated structure of the R layer 103, the G layer 102 and the B layer 101 stacked in that order on the K layer 104. The B layer 101 is configured to hold a liquid crystal 113 with substrates (film substrates) and transparent electrodes (ITO) 111, 112 and 115, 114 in opposed relation to each other. The G 102, on the other hand, is configured to hold a liquid crystal 123 with substrates and transparent electrodes 121, 122 and 125, 124 in opposed relation to each other. Similarly, the R layer 103 is configured to hold a liquid crystal 133 with substrates and transparent electrodes 131, 132 and 135, 134 in opposed relation to each other.

The transparent electrodes 112, 114 of the B layer 101 are connected to a B-layer control circuit 110, the transparent electrodes 122, 124 of the G layer 1021 are connected to a G-layer control circuit 120, and the transparent electrodes 132, 134 of the R layer 103 are connected to a R-layer control circuit 130. The transparent electrodes 112, 114; 122, 124; 132, 134 of the respective layers make up scan electrodes and data electrodes, respectively, and intersect each other in opposed relation to each other. Incidentally, in the layers 101 to 103, the scan electrodes are connected with a scan driver, and the data electrodes with a data driver. With this configuration, the display element 1 is capable of substantially full-color display.

In the aforementioned configuration, the display element 1 is configured of, for example, QVGA of size A6. The B layer 101, the G layer 102 and the R layer 103 are stacked in the same order, the liquid crystal is polarized in the same direction and the same driver is used as in the QVGA display element in size A4 described above with reference to Fig. 7. Incidentally, the control circuits (scan drivers) 130 to 110 of the layers RGB, though arranged separately from each other, can be unified to reduce the cost.

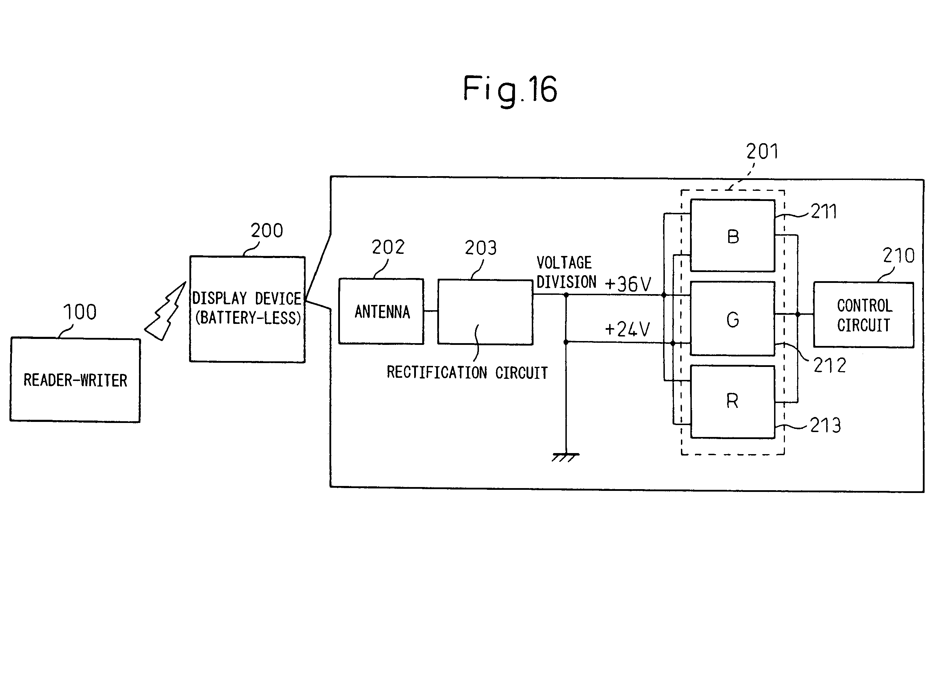

Fig. 16 is a block diagram schematically showing the electronic terminal using the display element of Fig. 15 according to another comparative example.

As shown in Fig. 16, the electronic terminal (display device) 200 according to this comparative example is adapted to receive the clock CLK, the display information and the drive power through the electromagnetic wave without contact with the reader-writer (electromagnetic wave source) 100 to perform the image write (rewrite) operation. The display device 200 includes a control circuit 210 and a display element 201 having the B layer 211, the G layer 212 and the R layer 213. The control circuit 210 is equivalent to a collection of the B-layer control circuit 110, the G-layer control circuit 120 and the R-layer control circuit 130 in Fig. 15.

Incidentally, a zener diode or the like is preferably used to stabilize the voltage input to the control circuit (driver) 210 with a small power consumption.

In the display device 200 according to this comparative example, when placed airborne over the reader-writer 100, for example, the display element (display device) 201 begins the write operation, and upon complete placement of the display device 200 over the reader-writer 100, the write operation is ended and the display image is held.

As the result of placing the display device 200 shown in Fig. 16 over the reader-writer 100 and driving it in the conventional sequence, a larger surge current than the energy suppliable from the electromagnetic wave flowed, resulting in a voltage drop, and a satisfactory display could not be obtained. Specifically, the pixels which otherwise should assume the planar state failed to assume the planar state due to the voltage drop, thereby leading to a dark display much lower in quality than the original contrast.

The use of the display element drive method according to the present invention, in contrast, substantially suppressed the surge current even immediately after placing the display device 200 over the reader-writer 100, and the drive voltage was so stable as to realize the original display quality.

In the battery-less display device described above, depending on the performance of the driver used, the empty scan rate of about 1 µsec/line or less (for example, several hundred nsec/line) is possible. Also, the image write operation rate of several msec/line or more is common. Incidentally, the ratio of the empty scan rate to the image write operation speed, though changeable with various conditions, is preferably not less than 100 from the viewpoint of the balance with the waiting time required for the empty scan.

As described above, the display element according to this invention can be used also with the battery-less display device 200 for wirelessly receiving the power and the display information (write image data) from the reader-writer without any battery as shown in Fig. 16. Specifically, according to this invention, the empty scan is executed before starting the image write operation by receiving the power and the image data from the reader-writer 100. In this way, the unstable state of the scan driver can be obviated, thereby making it possible to execute the image write operation while at the same time preventing a large surge current flow.

### INDUSTRIAL APPLICABILITY

According to this invention, there can be provided a display element drive method, a display element and an electronic terminal which are applicable to all the display elements for performing the write operation at low speed not only for the cholesteric liquid crystal but also for the still image display such as the electronic paper on the one hand, and by suppressing a large surge current which otherwise might be generated immediately after the image write operation, the user of an inexpensive multipurpose driver and the driver with battery are made available, thereby making possible the power saving and stable display quality on the other hand.

## Claims

1. A method of driving a cholesteric liquid crystal display element (1) including n scan electrodes (13) and a plurality of data electrodes (14), wherein n ≥ 2, the n scan electrodes (13) crossing the data electrodes (14) to form a matrix, said n scan electrodes (13) receiving scan pulses from a multipurpose Super Twisted Nematic driver operating as a scan driver (21), said scan driver (21) including m control terminals, wherein m ≥ n and the m control terminals include the n scan electrodes (13), comprising the steps of:
after switching on power, executing n empty scan processes by applying an empty scan voltage to said n scan electrodes (13) of the display element (1), wherein said empty scan voltage is not higher than a response voltage of said display element (1), and
after executing the n empty scan processes, executing n image writing processes by applying a drive voltage to said n scan electrodes (13) of the display element (1), and executing (m-n) empty scan processes by applying the empty scan voltage to the remaining (m-n) control terminals,
wherein a time interval between scan pulses of the empty scan processes is shorter than a time interval between scan pulses of the image writing processes.

2. The display element drive method as claimed in claim 1, wherein
the time interval between scan pulses of the empty scan processes is not more than 1 microsecond and the time interval between scan pulses of the image writing processes is between several hundred microseconds and several milliseconds.

3. The display element drive method as claimed in claim 1 or 2, wherein
each of said image writing processes is executed by applying a pulse-like drive voltage to the display element (1) between one of said n scan electrodes (13) and said plurality of data electrodes (14).

4. The display element drive method as claimed in claim 1 or 2, wherein
whilst executing said empty scan processes, image data supplied to a data driver (22) is random.

5. The display element drive method as claimed in claim 1 or 2, wherein
the scan driver (21) for sequentially selecting said n scan electrodes (13) and a data driver (22) for driving said plurality of data electrodes (14) are Super Twisted Nematic drivers.

6. A cholesteric liquid crystal display element (1) comprising n scan electrodes (13) and a plurality of data electrodes (14), wherein n ≥ 2, the n scan electrodes (13) crossing the data electrodes (14) to form a matrix, said n scan electrodes (13) being operable to receive scan pulses from a multipurpose Super Twisted Nematic driver operating as a scan driver (21), said scan driver (21) including m control terminals, wherein m ≥ n and the m control terminals include the n scan electrodes (13), wherein
after power is switched on, said scan driver (21) is arranged to execute n empty scan processes by applying an empty scan voltage to said n scan electrodes (13) of the display element (1), wherein said empty scan voltage is not higher than a response voltage of said display element (1), and
after said n empty scan processes are executed, said scan driver (21) is arranged to execute n image writing processes by applying a drive voltage to said n scan electrodes (13) of the display element (1), and to execute (m-n) empty scan processes by applying the empty scan voltage to the remaining (m-n) control terminals,
wherein a time interval between scan pulses of the empty scan processes is shorter than a time interval between scan pulses of the image writing processes.

7. The display element (1) as claimed in claim 6, wherein
the time interval between scan pulses of the empty scan processes is not more than 1 microsecond and the time interval between scan pulses of the image writing processes is between several hundred microseconds and several milliseconds.

8. The display element (1) as claimed in claim 6 or 7, wherein
each of said image writing processes is executed by applying a pulse-like drive voltage to the display element (1) between one of said n scan electrodes (13) selected by said scan driver (21) and the plurality of data electrodes (14) driven by a data driver (22).

9. The display element (1) as claimed in claim 6 or 7, wherein
when executing said empty scan processes, image data supplied to said data driver (21) is random.

10. The display element (1) as claimed in claim 6 or 7, wherein
said scan driver (21) and said data driver (22) are Super Twisted Nematic drivers.

## Patentansprüche

1. Verfahren zum Ansteuern eines cholesterischen Flüssigkristallanzeigeelements (1), das n Abtastelektroden (13) und mehrere Datenelektroden (14) enthält, wobei n ≥ 2, wobei die n Abtastelektroden (13) die Datenelektroden (14) zur Bildung einer Matrix kreuzen, wobei die n Abtastelektroden (13) Abtastpulse von einem Super Twisted Nematic Mehrzwecktreiber empfangen, der als Abtasttreiber (21) arbeitet, wobei der Abtasttreiber (21) m Steueranschlüsse enthält, wobei m ≥ n und die m Steueranschlüsse die n Abtastelektroden (13) enthalten, umfassend die folgenden Schritte:
nach dem Einschalten von Strom, Ausführen von n Leerabtastprozessen durch Anlegen einer Leerabtastspannung an die n Abtastelektroden (13) des Anzeigeelements (1), wobei die Leerabtastspannung nicht höher als eine Reaktionsspannung des Anzeigeelements (1) ist, und
nach der Ausführung der n Leerabtastprozesse Ausführen von n Bildschreibprozessen durch Anlegen einer Ansteuerungsspannung an die n Abtastelektroden (13) des Anzeigeelements (1) und Ausführen von (m-n) Leerabtastprozessen durch Anlegen der Leerabtastspannung an die verbleibenden (m-n) Steueranschlüsse,
wobei ein Zeitintervall zwischen Abtastpulsen der Leerabtastprozesse kürzer ist als ein Zeitintervall zwischen Abtastpulsen der Bildschreibprozesse.

2. Anzeigeelementansteuerverfahren nach Anspruch 1, wobei das Zeitintervall zwischen Abtastpulsen der Leerabtastprozesse nicht mehr als 1 Mikrosekunde ist und das Zeitintervall zwischen Abtastpulsen der Bildschreibprozesse zwischen mehreren hundert Mikrosekunden und mehreren Millisekunden liegt.

3. Anzeigeelementansteuerverfahren nach Anspruch 1 oder 2, wobei
jeder der Bildschreibprozesse durch Anlegen einer pulsartigen Ansteuerspannung an das Anzeigeelement (1) zwischen einer der n Abtastelektroden (13) und den mehreren Datenelektroden (14) ausgeführt wird.

4. Anzeigeelementansteuerverfahren nach Anspruch 1 oder 2, wobei
während der Ausführung der Leerabtastprozesse Bilddaten, die zu einem Datentreiber (22) geleitet werden, zufällig sind.

5. Anzeigeelementansteuerverfahren nach Anspruch 1 oder 2, wobei
der Abtasttreiber (21) zum sequentiellen Auswählen der n Abtastelektroden (13) und ein Datentreiber (22) zum Ansteuern der mehreren Datenelektroden (14) Super Twisted Nematic Treiber sind.

6. Cholesterisches Flüssigkristallanzeigeelement (1), das n Abtastelektroden (13) und mehrere Datenelektroden (14) umfasst, wobei n ≥ 2, wobei die n Abtastelektroden (13) die Datenelektroden (14) zur Bildung einer Matrix kreuzen, wobei die n Abtastelektroden (13) betätigbar sind, um Abtastpulse von einem Super Twisted Nematic Mehrzwecktreiber zu empfangen, der als Abtasttreiber (21) arbeitet, wobei der Abtasttreiber (21) m Steueranschlüsse enthält, wobei m ≥ n und die m Steueranschlüsse die n Abtastelektroden (13) enthalten, wobei
nach dem Einschalten von Strom der Abtasttreiber (21) dazu ausgebildet ist, n Leerabtastprozessen durch Anlegen einer Leerabtastspannung an die n Abtastelektroden (13) des Anzeigeelements (1) auszuführen, wobei die Leerabtastspannung nicht höher als eine Reaktionsspannung des Anzeigeelements (1) ist, und
nach der Ausführung der n Leerabtastprozesse der Abtasttreiber (21) dazu ausgebildet ist, n Bildschreibprozesse durch Anlegen einer Ansteuerungsspannung an die n Abtastelektroden (13) des Anzeigeelements (1) auszuführen und (m-n) Leerabtastprozessen durch Anlegen der Leerabtastspannung an die verbleibenden (m-n) Steueranschlüsse auszuführen,
wobei ein Zeitintervall zwischen Abtastpulsen der Leerabtastprozesse kürzer ist als ein Zeitintervall zwischen Abtastpulsen der Bildschreibprozesse.

7. Anzeigeelement (1) nach Anspruch 6, wobei
das Zeitintervall zwischen Abtastpulsen der Leerabtastprozesse nicht mehr als 1 Mikrosekunde ist und das Zeitintervall zwischen Abtastpulsen der Bildschreibprozesse zwischen mehreren hundert Mikrosekunden und mehreren Millisekunden liegt.

8. Anzeigeelement (1) nach Anspruch 6 oder 7, wobei
jeder der Bildschreibprozesse durch Anlegen einer pulsartigen Ansteuerspannung an das Anzeigeelement (1) zwischen einer der n Abtastelektroden (13), die vom Abtasttreiber (21) gewählt wird, und den mehreren Datenelektroden (14), die von einem Datentreiber (22) angesteuert werden, ausgeführt wird.

9. Anzeigeelement (1) nach Anspruch 6 oder 7, wobei
während der Ausführung der Leerabtastprozesse Bilddaten, die zum Datentreiber (22) geleitet werden, zufällig sind.

10. Anzeigeelement (1) nach Anspruch 6 oder 7, wobei
der Abtasttreiber (21) und der Datentreiber (22) Super Twisted Nematic Treiber sind.

## Revendications

1. Procédé d'attaque d'un élément d'affichage à cristaux liquides cholestériques (1) comprenant n électrodes de balayage (13) et une pluralité d'électrodes de données (14), où n ≥ 2, les n électrodes de balayage (13) croisant les électrodes de données (14) de façon à former une matrice, lesdites n électrodes de balayage (13) recevant des impulsions de balayage en provenance d'un circuit d'attaque de type Nématique Super-Torsadé polyvalent jouant le rôle de circuit d'attaque de balayage (21), ledit circuit d'attaque de balayage (21) comprenant m bornes de commande, où m ≥ n et les m bornes de commande comprennent les n électrodes de balayage (13), le procédé comprenant les étapes suivantes :
après mise sous tension, exécution de n opérations de balayage à vide par application d'une tension de balayage à vide auxdites n électrodes de balayage (13) de l'élément d'affichage (1), ladite tension de balayage à vide étant non supérieure à une tension de réponse dudit élément d'affichage (1), et
après exécution des n opérations de balayage à vide, exécution de n opérations d'écriture d'image par application d'une tension d'attaque auxdites n électrodes de balayage (13) de l'élément d'affichage (1), et exécution de (m - n) opérations de balayage à vide par application de la tension de balayage à vide aux (m - n) bornes de commande restantes,
un intervalle de temps entre les impulsions de balayage des opérations de balayage à vide étant plus court qu'un intervalle de temps entre les impulsions de balayage des opérations d'écriture d'image.

2. Procédé d'attaque d'un élément d'affichage selon la revendication 1, dans lequel
l'intervalle de temps entre les impulsions de balayage des opérations de balayage à vide ne fait pas plus d'1 microseconde et l'intervalle de temps entre les impulsions de balayage des opérations d'écriture d'image est compris entre plusieurs centaines de microsecondes et plusieurs millisecondes.

3. Procédé d'attaque d'un élément d'affichage selon la revendication 1 ou 2, dans lequel
chacune desdites opérations d'écriture d'image est exécutée par application d'une tension d'attaque impulsionnelle à l'élément d'affichage (1) entre l'une desdites n électrodes de balayage (13) et ladite pluralité d'électrodes de données (14).

4. Procédé d'attaque d'un élément d'affichage selon la revendication 1 ou 2, dans lequel
lors de l'exécution desdites opérations de balayage à vide, les données d'image envoyées à un circuit d'attaque de données (22) sont aléatoires.

5. Procédé d'attaque d'un élément d'affichage selon la revendication 1 ou 2, dans lequel
le circuit d'attaque de balayage (21) destiné à sélectionner séquentiellement lesdites n électrodes de balayage (13) et un circuit d'attaque de données (22) destiné à exciter ladite pluralité d'électrodes de données (14) sont des circuits d'attaque de type Nématique Super-Torsadé.

6. Elément d'affichage à cristaux liquides cholestériques (1) comprenant n électrodes de balayage (13) et une pluralité d'électrodes de données (14), où n ≥ 2, les n électrodes de balayage (13) croisant les électrodes de données (14) de façon à former une matrice, lesdites n électrodes de balayage (13) étant aptes à recevoir des impulsions de balayage en provenance d'un circuit d'attaque de type Nématique Super-Torsadé polyvalent jouant le rôle de circuit d'attaque de balayage (21), ledit circuit d'attaque de balayage (21) comprenant m bornes de commande, où m ≥ n et les m bornes de commande comprennent les n électrodes de balayage (13), dans lequel :
après mise sous tension, ledit circuit d'attaque de balayage (21) est conçu pour exécuter n opérations de balayage à vide par application d'une tension de balayage à vide auxdites n électrodes de balayage (13) de l'élément d'affichage (1), ladite tension de balayage à vide étant non supérieure à une tension de réponse dudit élément d'affichage (1), et
après exécution desdites n opérations de balayage à vide, ledit circuit d'attaque de balayage (21) est conçu pour exécuter n opérations d'écriture d'image par application d'une tension d'attaque auxdites n électrodes de balayage (13) de l'élément d'affichage (1), et pour exécuter (m - n) opérations de balayage à vide par application de la tension de balayage à vide aux (m - n) bornes de commande restantes,
un intervalle de temps entre les impulsions de balayage des opérations de balayage à vide étant plus court qu'un intervalle de temps entre les impulsions de balayage des opérations d'écriture d'image.

7. Elément d'affichage (1) selon la revendication 6, dans lequel l'intervalle de temps entre les impulsions de balayage des opérations de balayage à vide ne fait pas plus d'1 microseconde et l'intervalle de temps entre les impulsions de balayage des opérations d'écriture d'image est compris entre plusieurs centaines de microsecondes et plusieurs millisecondes.

8. Elément d'affichage (1) selon la revendication 6 ou 7, dans lequel chacune desdites opérations d'écriture d'image est exécutée par application d'une tension d'attaque impulsionnelle à l'élément d'affichage (1) entre l'une desdites n électrodes de balayage (13) sélectionnée par ledit circuit d'attaque de balayage (21) et ladite pluralité d'électrodes de données (14) excitée par un circuit d'attaque de données (22).

9. Elément d'affichage (1) selon la revendication 6 ou 7, dans lequel pendant l'exécution desdites opérations de balayage à vide, les données d'image envoyées audit circuit d'attaque de données (22) sont aléatoires.

10. Elément d'affichage (1) selon la revendication 6 ou 7, dans lequel
le circuit d'attaque de balayage (21) et ledit circuit d'attaque de données (22) sont des circuits d'attaque de type Nématique Super-Torsadé.
